# DEMANDE DE BREVET EUROPEEN

(11) **EP 3 822 710 A1**
(43) Date de publication de la demande: **19.05.2021**
(21) Numéro de dépôt: 19208918.3
(22) Date de dépôt: 13.11.2019
(51) Int. Cl.: G04B 11/00, F16D 41/18

(54) **MOBILE D'EMBRAYAGE UNIDIRECTIONNEL, NOTAMMENT POUR L'HORLOGERIE**

(71) Demandeur: Patek Philippe SA Genève, 1204 Genève (CH)
(72) Inventeur: HUMAIR Pascal, 1205 Genève (CH); LE BRIS Jean-Baptiste, 74970 Marignier (FR)
(74) Mandataire: Micheli & Cie SA

(57) **Abrégé**

Le mobile d'embrayage unidirectionnel comprend une première roue (1), une deuxième roue (2) coaxiale avec la première roue (1) et comprenant une denture intérieure (2b), un organe d'entraînement rigide (5) solidaire en rotation de la première roue (1) et au moins un cliquet rigide (6) relié à l'organe d'entraînement rigide (5) par une lame élastique (7). Le cliquet rigide (6) est bloqué contre la denture intérieure (2b) par l'organe d'entraînement rigide (5) pour solidariser en rotation les première et deuxième roues (1, 2) lorsque la première roue (1) ou la deuxième roue (2) est entraînée en rotation dans un sens correspondant à l'embrayage. La denture intérieure (2b) est à dents asymétriques. Le cliquet rigide (6) est agencé pour, dans sa position bloquée contre la denture intérieure (2b), être en contact ponctuel, en vue plane de dessus, avec deux dents consécutives (20b, 21b) de la denture intérieure (2b) et avec l'organe d'entraînement rigide (5).

## Description

La présente invention concerne un mobile d'embrayage unidirectionnel, c'est-à-dire un mobile comprenant deux roues coaxiales et un dispositif agencé pour solidariser en rotation ces deux roues dans un sens et autoriser une rotation relative de ces deux roues dans le sens opposé.

Dans un tel mobile d'embrayage, il est important que le couple transmis entre les deux roues lorsqu'elles tournent ensemble puisse être élevé et qu'à l'inverse le couple résistant entre les deux roues lorsqu'elles sont libres en rotation l'une par rapport à l'autre soit le plus faible possible voire nul.

A cet effet, le brevet CH 541741 propose de solidariser les deux roues dans le sens de l'embrayage par l'intermédiaire de cliquets reliés par des lames élastiques en U à une pièce d'entraînement rigide solidaire en rotation d'une des deux roues, cliquets qui sont bloqués dans une denture intérieure de l'autre roue directement par la pièce d'entraînement rigide lorsque le mobile est dans l'état embrayé. Un inconvénient de ce mobile d'embrayage est que les contacts entre les cliquets, la denture intérieure et la pièce d'entraînement rigide ne peuvent pas être bien maîtrisés, que ce soit dans le sens de l'embrayage ou dans celui du débrayage, ce qui peut perturber le fonctionnement et le rendre très sensible aux tolérances de fabrication et d'assemblage ainsi qu'à l'état d'usure des pièces.

Un autre mobile d'embrayage unidirectionnel, destiné particulièrement à un mécanisme horloger tel qu'un mécanisme de remontage manuel et automatique, est décrit dans le brevet EP 2392975 de la demanderesse. Il comprend une denture intérieure à dents de loup portée par une des roues et des cliquets élastiques en forme de C solidaires en rotation de l'autre roue et dont l'extrémité libre, en position de repos, est située sur une circonférence dont le diamètre est plus grand qu'une circonférence passant par le sommet des dents de loup et plus petit qu'une circonférence passant par le fond desdites dents. Grâce à cet agencement des cliquets, ceux-ci ne sont en contact avec la denture intérieure qu'une partie du temps pendant le débrayage, ce qui diminue ou annule le couple de résistance. D'autre part, dans le sens de l'embrayage l'extrémité libre des cliquets est déformée élastiquement vers l'extérieur pour s'appuyer dans le fond de la denture, faisant ainsi travailler les cliquets en compression. Le couple transmis entre les deux roues peut être élevé mais est limité par le risque de flambage des cliquets.

La présente invention vise à remédier, au moins en partie, aux inconvénients précités et propose à cette fin un mobile d'embrayage unidirectionnel selon la revendication 1, un mécanisme horloger le comprenant et une pièce d'horlogerie comprenant le mécanisme horloger.

D'autres caractéristiques et avantages de la présente invention apparaîtront à la lecture de la description détaillée suivante faite en référence aux dessins annexés dans lesquels :
- la figure 1 est une vue en perspective d'un mobile d'embrayage unidirectionnel selon un mode de réalisation particulier de l'invention ;
- la figure 2 est une vue en coupe axiale du mobile d'embrayage unidirectionnel illustré à la figure 1 ;
- les figures 3 à 5 sont des vues planes de dessus d'une partie du mobile d'embrayage illustré à la figure 1, montrant ce mobile respectivement dans un état de repos, dans un mode embrayage et dans un mode débrayage ; dans ces figures, une première roue et un axe du mobile d'embrayage n'ont pas été représentés pour des raisons de clarté.

Bien que d'autres applications soient bien entendu possibles, le mobile d'embrayage unidirectionnel selon l'invention est typiquement utilisé dans un mécanisme d'une pièce d'horlogerie, par exemple un mécanisme de remontage manuel et automatique tel que celui illustré à la figure 10 du brevet EP 2392975 ou un mécanisme de sonnerie. La pièce d'horlogerie est typiquement une montre-bracelet ou une montre de poche.

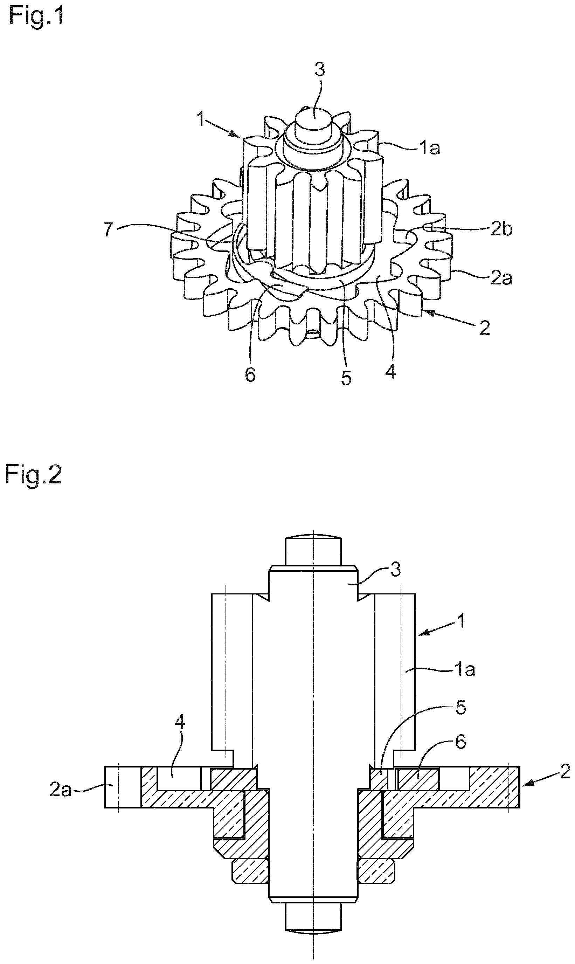

Dans le mode de réalisation représenté aux figures 1 à 5, le mobile d'embrayage unidirectionnel selon l'invention comprend une première roue 1, se présentant ici sous la forme d'un pignon, et une deuxième roue 2 coaxiale avec la première roue 1. La première roue 1 est solidaire d'un axe 3 et de préférence venue d'une pièce de fabrication avec cet axe. La deuxième roue 2 est pivotée folle sur l'axe 3. Les première et deuxième roues 1, 2 portent chacune une denture extérieure 1a, 2a. La deuxième roue 2 porte en outre une denture intérieure 2b à dents asymétriques. La denture intérieure 2b délimite un logement 4 dans lequel est situé un organe d'entraînement rigide 5 monté autour de l'axe 3 de manière solidaire. Dans ce même logement 4, un cliquet rigide 6 est relié à l'organe d'entraînement rigide 5 par une lame élastique 7 en forme de C, le cliquet rigide 6, la lame élastique 7 et l'organe d'entraînement rigide 5 étant de préférence venus d'une pièce de fabrication comme représenté.

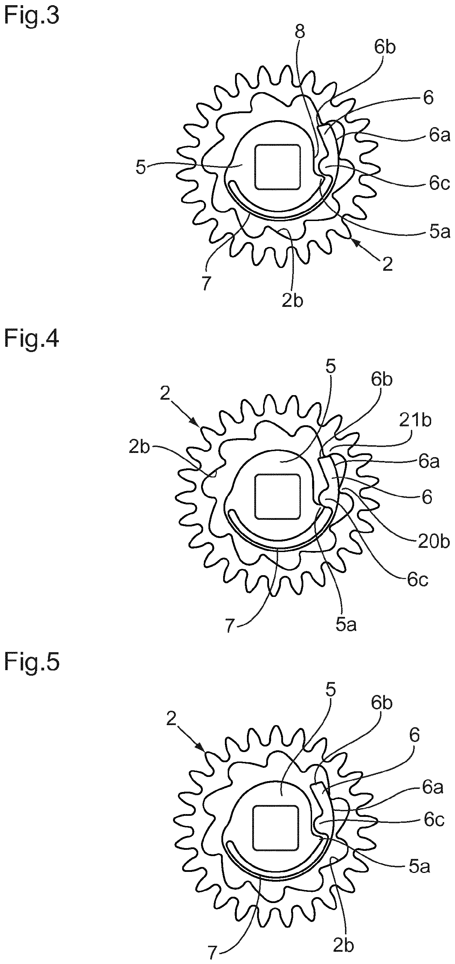

Le cliquet rigide 6 est ainsi coplanaire avec la denture intérieure 2b et peut coopérer avec elle pour faire fonctionner le mobile d'embrayage unidirectionnel selon un mode embrayage ou un mode débrayage. Lorsque la première roue 1 est tournée dans un premier sens, correspondant au sens contraire des aiguilles d'une montre aux figures 3 à 5, le cliquet rigide 6 est bloqué directement par l'organe d'entraînement rigide 5 contre la denture intérieure 2b (cf. figure 4), faisant ainsi tourner la deuxième roue 2 avec la première roue 1. Il s'agit du mode embrayage, que l'on peut obtenir également de manière inversée en faisant tourner la deuxième roue 2 dans un second sens, opposé audit premier sens, pour entraîner avec elle la première roue 1. Lorsque la première roue 1 est tournée dans le second sens, correspondant au sens des aiguilles d'une montre aux figures 3 à 5, le cliquet rigide 6 entraîné par l'organe d'entraînement rigide 5 via la lame élastique 7 décliquète (cf. figure 5), permettant à la deuxième roue 2 de rester immobile. Il s'agit du mode débrayage, que l'on peut obtenir également de manière inversée en faisant tourner la deuxième roue 2 dans le premier sens pour laisser libre la première roue 1.

Comme visible sur les dessins, le cliquet rigide 6 présente une face extérieure convexe 6a de grand rayon de courbure prolongeant la face extérieure de la lame élastique 7 en forme de C, une face d'extrémité plane 6b et une face intérieure présentant une protubérance arrondie 6c. Dans le mode embrayage, la face extérieure convexe 6a est en contact ponctuel (en vue plane de dessus) avec le sommet arrondi d'une dent 20b de la denture intérieure 2b, la face d'extrémité plane 6b est en contact ponctuel avec le sommet arrondi d'une dent adjacente 21b de la denture intérieure 2b et la protubérance arrondie 6c est en contact ponctuel avec un bec 5a de l'organe d'entraînement rigide 5, la force appliquée au cliquet rigide 6 par l'organe d'entraînement rigide 5 au point de contact entre le bec 5a et la protubérance arrondie 6c étant dirigée vers l'extérieur afin que le cliquet rigide 6 ne puisse pas sortir de la denture intérieure 2b. Le cliquet rigide 6 fonctionne dans ce mode embrayage en compression, contrairement aux embrayages classiques qui fonctionnent en traction. Cela permet de passer un couple bien supérieur et de désactiver totalement la lame élastique 7 de manière à ce qu'elle soit non fonctionnelle. Une entaille 8 pratiquée dans l'organe d'entraînement rigide 5 à proximité immédiate du bec 5a sert de dégagement à la protubérance arrondie 6c pendant le décliquetage du cliquet rigide 6 dans le mode débrayage.

Ces contacts ponctuels entre le cliquet rigide 6, la denture intérieure 2b et l'organe d'entraînement rigide 5 rendent le mobile d'embrayage unidirectionnel très précis dans sa conception et son fonctionnement et moins sensible aux tolérances de fabrication et d'assemblage ainsi qu'à l'état d'usure de ses composants. Grâce à la coopération directe entre l'organe d'entraînement rigide 5 et le cliquet rigide 6 dans le mode embrayage, le couple transmis peut être très élevé. De plus, la lame élastique 7 n'est pas précontrainte lors de l'assemblage de l'organe d'entraînement rigide 5 et elle n'intervient pas dans la transmission du couple, c'est-à-dire qu'avantageusement elle n'entre en contact avec aucune dent de la denture intérieure 2b ou une dent au plus. En d'autres termes, seul le cliquet rigide 6 est fonctionnel au contact de l'organe d'entraînement rigide 5 dans le mode embrayage. Aussi, la lame élastique 7 peut avoir une faible raideur permettant au cliquet rigide 6 de décliqueter avec peu de frottements ou aucun frottement dans le mode débrayage.

La présente invention n'est pas limitée à la forme de denture intérieure et à la forme de cliquet rigide illustrées sur les figures. Il va de soi que de nombreuses formes peuvent être envisagées pour obtenir les trois contacts ponctuels permettant de bloquer le cliquet rigide contre la denture intérieure.

Par ailleurs, le mobile d'embrayage unidirectionnel pourrait comporter plusieurs cliquets rigides, par exemple trois cliquets rigides, régulièrement répartis autour de l'axe 3 et reliés chacun à l'organe d'entraînement rigide 5 par une lame élastique, et plusieurs becs correspondants sur l'organe d'entraînement rigide 5.

## Revendications

1. Mobile d'embrayage unidirectionnel comprenant une première roue (1), une deuxième roue (2) coaxiale avec la première roue (1) et comprenant une denture intérieure (2b), un organe d'entraînement rigide (5) solidaire en rotation de la première roue (1) et au moins un cliquet rigide (6) relié à l'organe d'entraînement rigide (5) par une lame élastique (7), le cliquet rigide (6) étant bloqué contre la denture intérieure (2b) par l'organe d'entraînement rigide (5) pour solidariser en rotation les première et deuxième roues (1, 2) lorsque la première roue (1) ou la deuxième roue (2) est entraînée en rotation dans un sens correspondant à l'embrayage, **caractérisé en ce que** la denture intérieure (2b) est à dents asymétriques et **en ce que** le cliquet rigide (6) est agencé pour, dans sa position bloquée contre la denture intérieure (2b), être en contact ponctuel, en vue plane de dessus, avec deux dents consécutives (20b, 21b) de la denture intérieure (2b) et avec l'organe d'entraînement rigide (5).

2. Mobile d'embrayage unidirectionnel selon la revendication 1, **caractérisé en ce que** le cliquet rigide (6) est agencé pour que le contact ponctuel entre le cliquet rigide (6) et une première (20b) desdites deux dents consécutives (20b, 21b) se produise entre une face extérieure de forme convexe (6a) du cliquet (6) et un sommet arrondi de ladite première dent (20b).

3. Mobile d'embrayage unidirectionnel selon la revendication 1 ou 2, **caractérisé en ce que** le cliquet rigide (6) est agencé pour que le contact ponctuel entre le cliquet rigide (6) et une seconde (21b) desdites deux dents consécutives (20b, 21b) se produise entre une face d'extrémité plane (6b) du cliquet rigide (6) et un sommet arrondi de ladite seconde dent (21b).

4. Mobile d'embrayage unidirectionnel selon l'une quelconque des revendications 1 à 3, **caractérisé en ce que** le cliquet rigide (6) est agencé pour que le contact ponctuel entre le cliquet rigide (6) et l'organe d'entraînement rigide (5) se produise entre une protubérance arrondie (6c) d'une face intérieure du cliquet rigide (6) et un bec (5a) de l'organe d'entraînement rigide (5).

5. Mobile d'embrayage unidirectionnel selon la revendication 4, **caractérisé en ce que** l'organe d'entraînement rigide (5) comprend une entaille (8) servant de dégagement à la protubérance arrondie (6c) pendant le décliquetage du cliquet rigide (6) lorsque la première roue (1) ou la deuxième roue (2) est entraînée en rotation dans un sens correspondant au débrayage.

6. Mobile d'embrayage unidirectionnel selon l'une quelconque des revendications 1 à 5, **caractérisé en ce que** la lame élastique (7) est hors de contact avec la denture intérieure (2b), ou est en contact avec une seule dent de la denture intérieure (2b), lorsque le cliquet rigide (6) est dans sa position bloquée contre la denture intérieure (2b).

7. Mécanisme horloger comprenant un mobile d'embrayage unidirectionnel selon l'une quelconque des revendications 1 à 6.

8. Pièce d'horlogerie comprenant un mécanisme horloger selon la revendication 7.
